# EUROPEAN PATENT APPLICATION

(11) **EP 4 412 400 A1**
(43) Date of publication of application: **07.08.2024**
(21) Application number: 23154816.5
(22) Date of filing: 03.02.2023
(51) Int. Cl.: H05B 47/17, H02J 9/06, F21S 9/02, H05B 45/382, G08B 29/18, F21S 8/00

(54) **SELF-CONTAINED EMERGENCY LUMINAIRE**

(71) Applicant: Tridonic GmbH & Co. KG, 6851 Dornbirn (AT)
(72) Inventor: Wilson, Ian, 6850 Dornbirn (AT)
(74) Representative: Beder, Jens

(57) **Abstract**

The present invention relates to an emergency luminaire comprising an emergency lighting unit, non-emergency lighting unit, an energy storage device (5) and a converter device (1,4) configured to provide, via two electric lines (3), a first supply voltage to the lighting units using energy stored in the energy storage device (5) and to provide, via the two electric lines (3), a second supply voltage to the lighting units using mains supply. The converter device (1, 4) determines whether or not the mains supply fails and provides the first supply voltage when the mains supply fails, wherein the non-emergency lighting unit determines whether the first supply voltage is provided and deactivates its light source when the first supply voltage is provided.

## Description

The invention is in the field of emergency lighting devices. In particular, the invention relates to an emergency light system with emergency lights and non-emergency lights.

In emergency light systems, converter devices (converters, ballasts, driver devices) are used for providing a supply voltage and/or current to an emergency light for a rated service time in case mains supply fails using energy stored in an energy storage device such as a rechargeable battery. The rated service time defines battery discharge duration during which the emergency converter is required to drive the emergency light with a predetermined drive current. The maximum possible discharge duration depends on the emergency light and the capacity of the rechargeable battery.

In some lighting systems, such as continuous-row lighting systems (e.g., track or slot lighting systems), luminaires for conventional lighting and emergency lights (e.g., exit signs) are mounted on a common support structure that also carries supply and control lines for the luminaires and separate supply and control lines for the not self-contained emergency lights, because central emergency lighting requires separate power cables for the emergency lights and the conventional luminaires, whereas this requirement does not apply to self-contained emergency lighting devices having a local battery.

However, separate supply and control lines increase the overall cost of the system. In addition, the supporting structure, such as a mounting rail, must be slim for many purposes, so the number of supply and control lines is limited.

It is an object of the present invention to provide an apparatus and a method, which reduce the above problems. In particular, an object of the present invention is to provide an emergency lighting system that can reduce the number of electrical lines with low effort and cost.

This object is achieved by the emergency lighting system according to the enclosed independent claim 1. Advantageous features of the present invention are defined in the corresponding subclaims.

According to the present invention, an emergency lighting system comprises an emergency lighting device, an energy storage device and/or an energy storage interface configured to connect the energy storage device to the emergency lighting system, a converter device configured to provide, via two electric lines (e.g., two-wire link or two tracks of a PCB), a first supply voltage and/or current to the emergency lighting device using energy stored in the energy storage device and to provide, via the two electric lines, a second supply voltage and/or current to the emergency lighting device using mains supply. The system further comprises a control circuit configured to determine whether the mains supply fails and to control the converter device to provide the first supply voltage and/or current to the emergency lighting device when the mains supply fails. The emergency lighting device comprises at least a first lighting unit having a first light source and a second lighting unit having a second light source, wherein the first lighting unit is configured to operate the first light source using the first supply voltage and/or current and the second lighting unit is configured to operate the second light source using the second supply voltage and/or current. The second lighting unit determines continuously or periodically whether the first supply voltage and/or current is provided by the converter device and deactivates the second light source when the first supply voltage and/or current is provided.

In this way, no separate supply lines are required because the supply voltage and/or current for the first lighting unit (emergency lighting unit) and the supply voltage and/or current for the second lighting unit (non-emergency lighting unit) is provided by the two electric lines.

The emergency lighting system can be a self-contained emergency luminaire in which the distance between the emergency lighting device and the emergency converter circuit, or the length of the two electric lines, is a maximum of one meter. According to a preferred embodiment, the emergency lighting system comprises a housing, in which at least one of the energy storage device, the energy storage interface, the converter device and the control circuit is arranged, wherein a distance between the emergency lighting device and the housing is one meter or less. Preferably, the length of the two electric lines (cable length) outside the emergency lighting device and the housing is one meter or less.

Alternatively or in addition, the emergency lighting device can comprise at least one mounting rail for carrying the first lighting unit and the second lighting unit, wherein the emergency luminaire comprises two power supply lines arranged in or attached to the mounting rail and connected with the two-wire link and the first lighting unit and the second lighting unit are connected in parallel to the two power supply lines. Preferably, the length of the two electric lines (cable length) outside the mounting rail and the emergency lighting device or the housing is one meter or less. In this way, a lighting unit may be further than one meter from the emergency lighting device or the housing because the mounting rail is part of the emergency lighting device.

Alternatively, the mounting rail can be attached to the housing so that the housing is within one meter of the emergency lighting device.

The housing can be placed above a suspended ceiling and the luminaire below the suspended ceiling and connected by a cable as the two-wire link. Alternatively, the emergency lighting system can comprise a connection socket and fastening means configured to fasten the connection socket in a recess of the suspended ceiling, wherein the mounting rail can be attached to the housing by the connection socket.

The first lighting unit can operate in the maintained lighting mode, in which the first light source is used for the emergency lighting as well as for conventional lighting or for permanently illuminated escape route signs. Alternatively, the first light source can operate in the non-maintained lighting mode, wherein the first lighting unit is configured to determine whether or not the second supply voltage and/or current is provided by the emergency converter circuit and to deactivate the first light source when the first supply voltage and/or current is provided.

The converter device can comprise a converter circuit that selectively generates the first supply voltage and/or current or the second supply voltage and/or current. Alternatively, the converter device can comprise an emergency converter circuit configured to provide, via the two electric lines, the first supply voltage and/or current to the emergency lighting device using energy stored in the energy storage device and a non-emergency converter circuit configured to provide, via the two electric lines, the second supply voltage and/or current to the emergency lighting device using the mains supply, wherein the control circuit is configured to activate the emergency converter circuit to provide the first supply voltage and/or current to the emergency lighting device when the mains supply fails.

Switching between normal operation and emergency operation or between normal operation and test operation can be done by selectively connecting the emergency converter circuit or non-emergency converter circuit to the two-wire link, wherein the emergency lighting system comprises a switching means configured to connect either the emergency converter circuit or the non-emergency converter circuit to the two-wire link and the control circuit is configured to control the switching means to disconnect the non-emergency converter circuit from the two-wire link und to connect the emergency converter circuit to the two-wire link, when the mains supply fails or a test is requested.

The control circuit can be configured to detect a presence of a test request signal during the non-emergency converter circuit is connected to the two electric lines and, when the presence of the test request signal is detected, to disconnect the non-emergency converter circuit from the two electric lines, to connect the emergency converter circuit to the two electric lines and to start a test (function or operation duration test) assigned to the test request signal. In addition, the control circuit can be configured to deactivate (switch-off) the non-emergency converter circuit when the presence of the test request signal is detected.

The emergency lighting system may need to be tested at predefined intervals by performing function and/or operation endurance tests. During the function test, which takes about two minutes, the function of the energy storage device, the first lighting unit and the emergency converter circuit are tested. A function test is initiated for example by operating a test switch arranged at or externally to the emergency converter. In addition to the functions tested in the function test, the capacity of the battery is tested in the operation endurance test (duration test) by operating the first lighting unit with the battery for 2/3 of its rated operating time of, e.g., one or three hours. The time interval (e.g., weekly/monthly) between two successive functional tests is longer than the time interval (e.g., annually) between two successive operation endurance tests. The test procedure (intervals, durations) is different in many countries and respectively valid procedure/protocol can be set/stored in the emergency lighting system and/or input by a mobile configuration device via near-field communication (NFC).

Since there is no difference in wiring, any lighting unit can easily be configured to function as either an emergency lighting unit or a non-emergency lighting unit. According to a preferred embodiment, at least one of the first lighting unit and the second lighting unit comprises a storage means or an input means configured to store or input a command (configuration information). The first lighting unit can be configured to determine, based on the command, whether the first light source is to be operated in an emergency lighting mode or in a non-emergency lighting mode and to operate the first light source using the first supply voltage in the emergency lighting mode or to operate the first light source using the second supply voltage and/or current in the non-emergency lighting mode. In addition or alternatively, the second lighting unit can be configured to determine, based on the command, whether the second light source is to be operated in the emergency lighting mode or the non-emergency lighting mode and to operate the second light source using the first supply voltage and/or current in the emergency lighting mode or to operate the first light source using the second supply voltage and/or current in the non-emergency lighting mode.

In addition, if the first or second light source is to be operated in an emergency lighting mode, the first or second lighting unit can be configured to determine, based on the configuration information, whether the lighting unit is to be operated in the maintained lighting mode or the non-maintained lighting mode described above.

The first supply voltage and the second supply voltage can be different so that the first lighting unit and/or the second lighting unit can detect the lighting mode based on the supply voltage, wherein the first lighting unit and/or the second lighting unit is configured to measure the voltage applied to the two-wire link and to determine, based on the measured voltage, whether the first supply voltage is provided by the emergency converter circuit or the second supply voltage is provided by the non-emergency converter circuit.

A malfunction of the first or the second lighting unit can be detected based on its power consumption so that no separate lines are needed for signaling the malfunction. The control circuit can be configured to detect the power consumption of at least the second lighting unit, to determine a malfunction of the emergency lighting device when the difference between the detected power consumption and a predetermined current consumption is greater than a threshold and to output a warning signal and/or to deactivate the emergency converter circuit when the malfunction is determined.

The emergency lighting device can comprise a plurality of the first lighting units and/or a plurality of the second lighting units and the control circuit can detect that there is a fault in one or more of lighting units, wherein a predetermined power consumption and/or a threshold is set depending on the number of the first lighting units or the number of the second lighting units. In addition, the control circuit can determine the number of the lighting units with a fault by comparing the detected power consumption with a plurality of predetermined current consumptions each of which is assigned to a certain number.

At least to the first lighting unit, a communication or test mode can be signaled by changing/ varying the supply voltage and/or current. According to a preferred embodiment, the control circuit is configured to signal the communication or test mode to the first lighting unit by controlling the emergency converter circuit to provide a third supply voltage via the two-wire connection after providing the second supply voltage different from the third supply voltage.

In the communication mode, the emergency converter circuit can transmit information to the first lighting unit by modulating a signal containing the information onto the third supply voltage, wherein the first lighting unit is configured to demodulate the signal.

The first lighting unit can determine the status of the first light source and transmit a signal indicating the determined status to the emergency converter circuit by modulating the signal onto the third supply voltage, wherein the emergency converter circuit is configured to demodulate the signal.

When the emergency lighting device comprises a plurality of the first lighting units, the signals can be transmitted sequentially in a specific order so that the control circuit can assign the corresponding lighting unit to each received signal. According to a preferred embodiment, each of the first lighting units is assigned a unique response time and is configured to transmit the signal in accordance with the unique response time, wherein the unique response time indicates a period between the time when the communication or test mode is signaled and the time when the signal is to be transmitted by the first lighting unit.

Embodiments of the invention are discussed in detail with reference to the enclosed figures, in which
- Fig. 1: shows a simplified block diagram of parts of an emergency light system according to a first embodiment of the present invention,
- Fig. 2: shows a simplified block diagram of parts of the emergency converter shown in Fig. 1,
- Fig. 3: shows a simplified block diagram of parts of a non-emergency lighting unit shown in Fig. 1,
- Fig. 4: shows a diagram with the course of the voltage that is output by the emergency converter shown in Fig. 1, and
- Fig. 5: shows a perspective view of an emergency light system according to a second embodiment of the present invention.

In the figures, same reference numbers denote same or equivalent structures. The explanation of structures with same reference numbers in different figures is avoided where deemed possible for sake of conciseness.

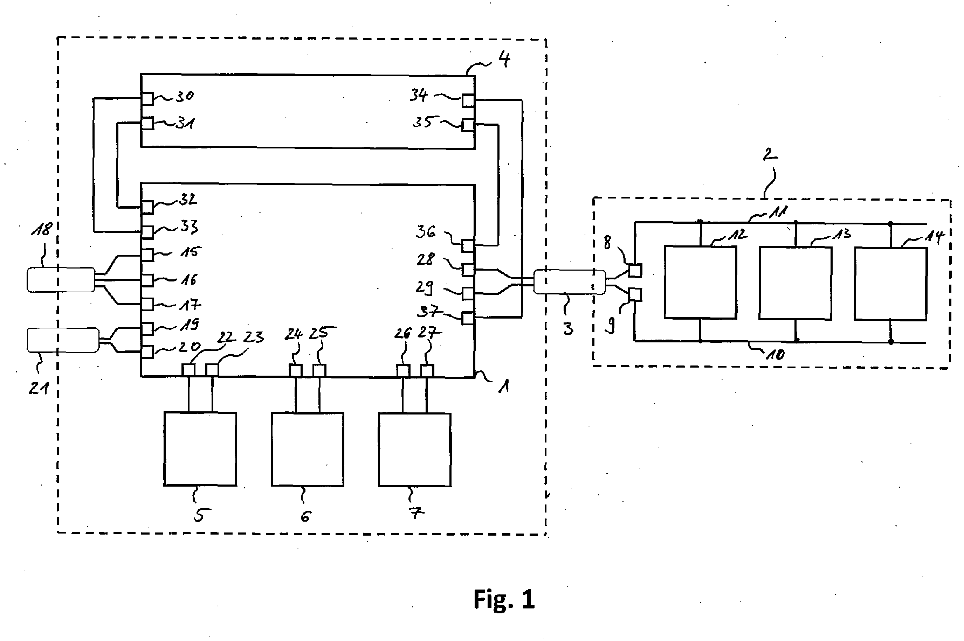

Fig. 1 shows an emergency lighting system according to a first embodiment of the present invention comprising an emergency converter 1 (emergency converter circuit) detachably connected to an emergency lighting device 2 via a two-core cable 3 and a power-supply unit 4 (non-emergency converter circuit), an energy storage device 5, a test switch 6 and an indicator light 7 that are connected to the emergency converter 1.

The emergency converter 1, the power-supply unit 4, the energy storage device 5, the test switch 6 and the indicator light 7 can be housed in a casing as indicated by the dashed line, wherein the two-core cable 3 has a maximum length of one meter and/or the distance between the housing the emergency lighting device and the emergency lighting device 2 is a maximum of one meter.

The emergency lighting device 2 comprises a supply terminal 8, 9 (connectors) to which the two-core cable 3 is connected, a common DC bus 10, 11 connected to the supply terminal 8, 9 and a plurality of lighting units 12..13, each of which is connected to the common DC bus 10, 11. The emergency lighting device 2 can be a continuous row system (lighting strip system), in which the lighting units 12..13 are arranged at different locations along the light strip. In addition, the emergency lighting device 2 can comprise signal lines to which each lighting unit 12..13 is connected and a control terminal (connectors) for connecting the signal lines to, for example, a DALI cable.

The emergency converter 1 comprises mains terminal 15..17 (connectors), DALI terminal 19, 20 (connectors), battery terminal 22, 23 (connectors), a terminal 24, 25 (connectors) and a terminal 26, 27 (connectors), to which three-core mains cable 18, a two-core DALI cable 21, the energy storage device 5, the test switch 6 and the indicator light 9 are connected, respectively. The two-core cable 3 is connected to a lighting device terminal 28, 29 (connectors) of the emergency converter 1, mains connection 30, 31 (connectors) of the power-supply unit 4 (PSU) is connected to a PSU-supply terminal 32, 33 (connectors) of the emergency converter 1 and an output terminal 34, 35 (connectors) of the power-supply unit 4 (PSU) is connected to a PSU-input terminal 36, 37 (connectors) of the emergency converter 1.

The three-core mains cable 18 contains a switched live conductor connected to the connector 15 of the mains terminal 15..17, an un-switched live conductor connected to the connector 16 of the mains terminal 15..17 and a neutral conductor connected to the connector 17 of the mains terminal 15..17. The switched live conductor can be connected to an output of a light switch or presence detector (not shown). The emergency converter 1 connects the connector 16 (or 15) to the PSU-supply terminal 32 and connects the connector 17 to the PSU-supply terminal 33 when the power-supply unit 4 is to be activated. Alternatively, the neutral conductor can be also connected to mains connection 30 of the power-supply unit 4 and only the connector 16 (or 15) is connected to the PSU-supply terminal 32 by the emergency converter 1.

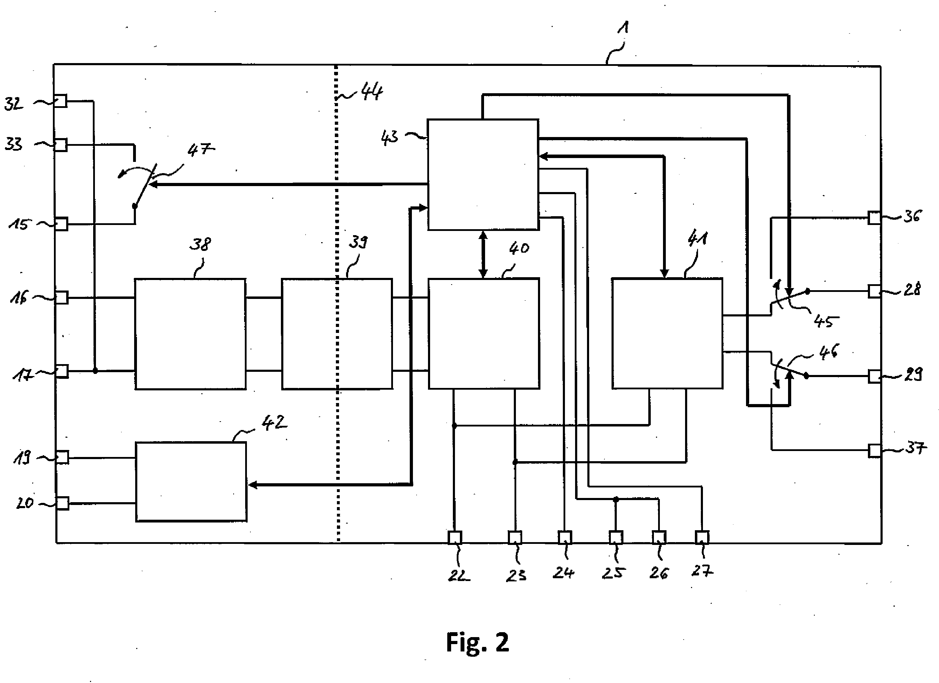

Fig. 2 shows the emergency converter 1 comprising a rectifier unit 38 connected to the mains terminal 16, 17, DC-DC converter unit 39 supplied with DC voltage from the rectifier unit 38, a charging circuitry 40 for the energy storage device 5 connected to the terminal 22, 23, a LED driver 41 for generating a LED drive current using energy stored in the energy storage device 5, DALI communication unit 42 connected to the DALI terminal 19, 20 and a control circuit 43, which is advantageously a microcontroller circuit or a dedicated application specific integrated circuit (ASIC).

In addition, an active Power-factor correction (PFC) circuit can be a part of the rectifier unit 38 or the DC-DC converter unit 39 and/or the rectifier unit 9 can include filters to control electromagnetic interference (EMI) and ensure electromagnetic compatibility (EMC) and/or a grid-monitoring circuit that reports a mains supply failure to the control circuit 43 when it is detected by the grid-monitoring circuit. Alternatively, an external device can determine the failure of mains supply and transmit a control signal indicating an emergency lighting mode to the control circuit 43 via the DALI communication unit 42.

The DC-DC converter unit 39 generates a constant operating voltage or current for the charging circuit 40 using the DC voltage generated by the rectifier unit 38 and includes a flyback converter that provides an isolation barrier 44 between high voltages on a mains supply side and low voltages on a low voltage side (SELV).

The control circuit 43 activates the LED driver 41 to generate supply voltage and LED drive current for the emergency lighting device 2 using energy stored in the energy storage device 5 when the failure of mains supply is detected (emergency lighting operation) or the test switch 6 is operated (test operation). In the test operation, a function test or an operation endurance test is performed and the test result is indicated by the indicator light 7. In addition, the DALI communication unit 42 including an isolation barrier can receive a test request signal and transmit the test result.

If there is no emergency lighting or test operation, the control circuit 43 activates the power supply unit 4 to generate supply voltage and LED drive current for the emergency lighting device 2 using mains supply. For this, the emergency converter 1 comprises change-over switches 45, 46 and a power switch 47 controlled by the control circuit 43, wherein the switched live and neutral are looped through when the power switch 47 is closed and the output terminal 34, 35 of the power-supply unit 4 is connected to the lighting device terminal 28, 29 when the change-over switches 45, 46 switch as indicated by the arrows.

The power supply unit 4 comprises at least a rectifier unit and a DC-to-DC converter and generates a supply voltage different from the supply voltage generated by the LED driver 41. According to the present invention, some of the lighting units 12..13 are emergency lighting units and the other lighting units (non-emergency lighting units) automatically turn off when the supply voltage generated by the LED driver 41 is applied to the emergency lighting device 2. When the supply voltage is generated by the power supply unit 4, all lighting units 12..13 are switched on (maintained lighting mode) or only emergency lighting units are automatically switched off (non-maintained lighting mode).

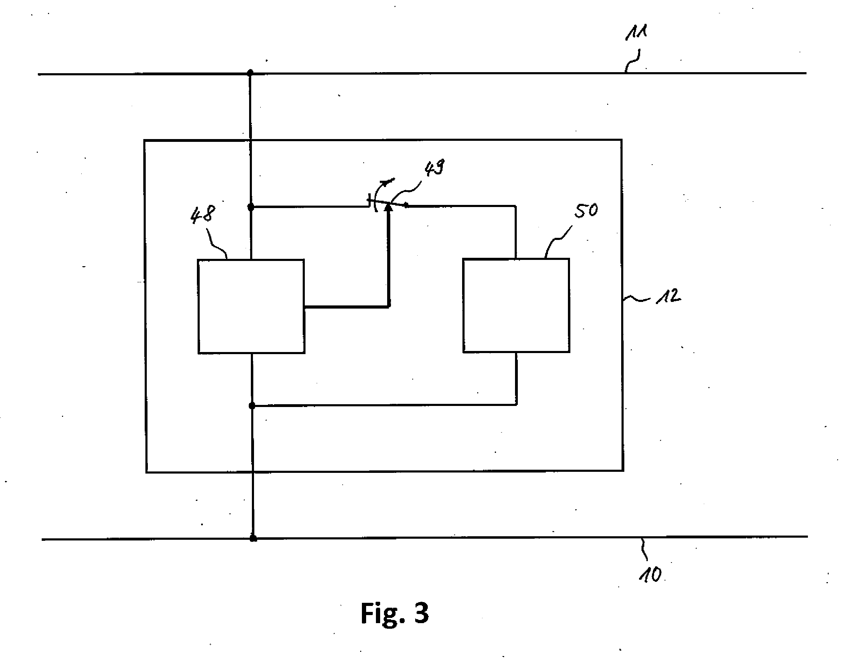

Fig. 3 shows the lighting unit 12, which is a non-emergency lighting unit. The lighting unit 12 comprises a control means 48 connected to the DC bus 10, 11, a switch 49 (open contact) and a light source 50 comprising one or more LEDs. The light source 50 is connected to the DC bus 10, 11 via the switch 49 and emits light when the power supply unit 4 generates the supply voltage, i.e. the light switch is switched on or the presence detector detects a presence. The supply voltage of the DC bus 10, 11 is monitored by the control means 48, which opens the switch 49 when the supply voltage generated by the LED driver 41 is detected so that the light source 50 is switched off. Alternatively, the control means 48 opens/closes the switch 49 when the supply voltage generated by the power supply unit 4 is detected (i.e., there is no emergency lighting or test operation) and a control signal (e.g., DALI signal) is received wirelessly or via a signal line. In addition, the light emitted by the light source 50 can be dimmed based on the control signal indicating a dimming level. For this, the lighting unit 12 comprises a DC-to-DC converter circuit (e.g., buck converter) controlled by the control means 48 and connected to the DC bus 10, 11 via the switch 49 or without the switch 49 (i.e., the DC-to-DC converter circuit replaces the switch 49).

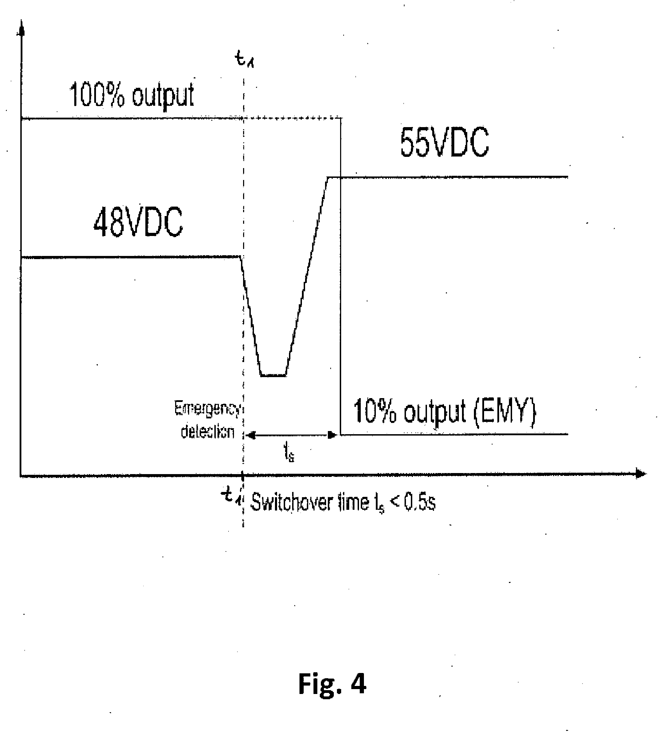

Fig. 4 shows a diagram with the course of the voltage that is detected by the control means 48. First, the supply voltage of 48 V is generated by the power supply unit 4 and detected by the control means 48. At time t₁ the failure of mains supply is detected and the control circuit 43 activates the LED driver 41 to generate a supply voltage of 55 V using energy stored in the energy storage device 5 and controls the power switch 47 and the change-over switches 45, 46 to deactivate the power supply unit 4. After short switching period tₛ, the supply voltage of 55V is fed to the DC bus 10, 11. The control means 48 can be configured to open the switch 49 when the supply voltage of 55 V or the voltage changeover (switching period tₛ) is detected.

When the emergency lighting device 2 operates in the maintained lighting mode, the emergency lighting units must also operate with a supply voltage of 48 V. To achieve this, at least the emergency lighting units can comprise a DC-to-DC converter circuit (e.g., buck converter) to generate a constant operating voltage for the light source 50.

At least some of the lighting units 12..13 can have the same structure, and the assignment of whether a lighting unit is an emergency lighting unit or a non- emergency lighting unit may be made by means of dip-switch mounted on the lighting unit. Alternatively, each lighting unit 12..13 can comprise a transponder configured to receive and store configuration information from a mobile configuration device via near-field communication (NFC) and the control means 48 determines whether the lighting unit is an emergency lighting unit or a non-emergency lighting unit based on the stored configuration information.

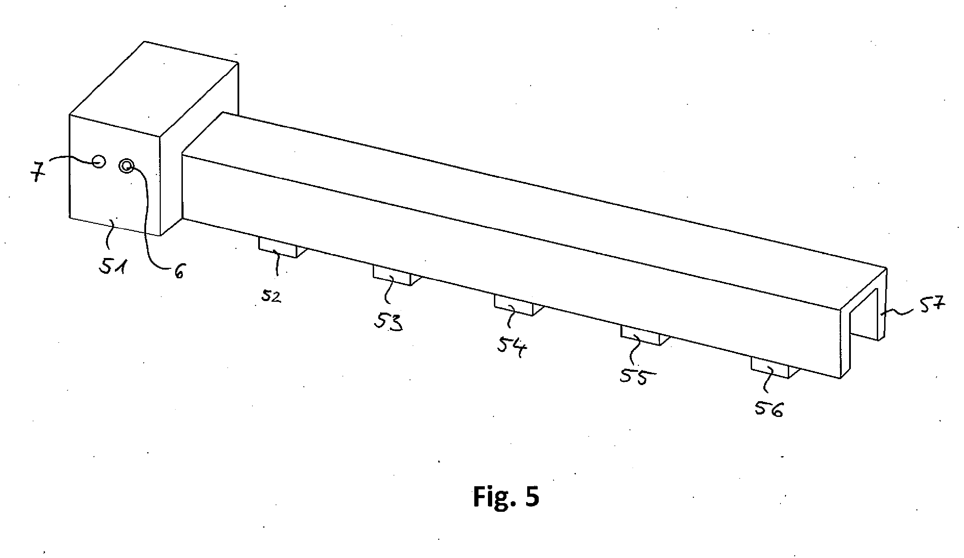

Fig. 5 shows a perspective view of an emergency light system according to a second embodiment of the present invention, in which the power-supply unit 4, the emergency converter 1, the energy storage device 5, the test switch 6 and the indicator light 7 are installed in a housing 51 and five lighting units 52..56 are mounted on a mounting rail 57 that includes the DC bus 10, 11 (not shown) and rests against the housing 51. The emergency light system shown in Fig. 5 is an emergency luminaire, in which the lighting unit 54 is configured as an emergency light unit and the remaining lighting units 52, 53 and 55, 56 are configured as non-emergency light units.

A malfunction of the lighting unit 54 and/or the lighting units 52, 53 and 55, 56 can be detected by their power consumption. For this, the emergency light system comprises means for measuring the power consumption of the lighting unit 54 in an emergency lighting or test mode and the control circuit 43 determines a malfunction of the lighting unit 54 if the measured power consumption remains below a predetermined power consumption or threshold. In addition or alternatively, the predetermined power consumption and/or the threshold can be set as a function of the number of lighting units of the emergency light system that are to be illuminated in a particular mode (e.g., five lighting units 52..56 in the maintained lighting mode and four lighting units 52, 53, 55, 56 non-maintained lighting mode), wherein the control circuit can 43 determines the number of the lighting units with a fault by comparing the measured power consumption with a plurality of predetermined current consumptions each of which is assigned to a certain number.

## Claims

1. An emergency lighting system comprising
an emergency lighting device (2);
an energy storage device (5) and/or an energy storage interface (22, 23) configured to connect the energy storage device (5) to the emergency lighting system;
a converter device (1, 4) configured to provide, via two electric lines (3), a first supply voltage and/or current to the emergency lighting device (2) using energy stored in the energy storage device (5) and to provide, via the two electric lines (3), a second supply voltage and/or current to the emergency lighting device (2) using mains supply, and
a control circuit (43) configured to determine whether or not the mains supply fails and to control the converter device (1, 4) to provide the first supply voltage and/or current to the emergency lighting device (2) when the mains supply fails,
the emergency lighting device (2) comprises at least a first lighting unit having a first light source and second lighting unit having a second light source,
the first lighting unit is configured to operate the first light source using the first supply voltage and/or current;
the second lighting unit is configured to operate the second light source using the second supply voltage and/or current; and
the second lighting unit is configured to determine whether or not the first supply voltage and/or current is provided by the emergency converter circuit (41) and to deactivate the second light source when the first supply voltage and/or current is provided.

2. The emergency lighting system according to claim 1, further comprising
a housing (51), in which at least one of the energy storage device (5), the energy storage interface (22, 23), the converter device (1, 4) and the control circuit (43) is arranged, wherein
a distance between the emergency lighting device (2) and the housing (51) is a maximum of one meter.

3. The emergency lighting system according to claim 1 or 2, wherein
the emergency lighting device (2) comprises at least one mounting rail (57) for carrying the first lighting unit and the second lighting unit;
the emergency lighting system comprises two power supply lines (10, 11) arranged in or attached to the at least one mounting rail (57) and connected with the two electric lines (3); and
the first lighting unit and the second lighting unit are connected to the two power supply lines (10, 11).

4. The emergency lighting system according to claims 2 and 3, wherein
the at least one mounting rail (57) is attached to the housing (51), and/or
the emergency lighting system comprises a connection socket and fastening means configured to fasten the connection socket in a recess of a suspended ceiling, wherein the at least one mounting rail (57) is attached to the housing (51) by the connection socket.

5. The emergency lighting system according to any one of the preceding claims, wherein
the first lighting unit is configured to determine whether or not the second supply voltage and/or current is provided by the converter device (1, 4) and to deactivate the first light source when the second supply voltage and/or current is provided.

6. The emergency lighting system according to any one of the preceding claims, wherein
the converter device (1, 4) comprises an emergency converter circuit (41) configured to provide, via the two electric lines (3), the first supply voltage and/or current to the emergency lighting device (2) using energy stored in the energy storage device (5) and a non-emergency converter circuit (4) configured to provide, via the two electric lines (3), the second supply voltage and/or current to the emergency lighting device (2) using the mains supply; and
the control circuit (43) is configured to activate the emergency converter circuit (41) to provide the first supply voltage and/or current to the emergency lighting device (2) when the mains supply fails.

7. The emergency lighting system according to claim 6, wherein
the converter device (1, 4) further comprises a switching means (45, 46) configured to connect either the emergency converter circuit (41) or the non-emergency converter circuit (4) to the two electric lines (3); wherein
the control circuit (43) is configured to control the switching means (45, 46) to disconnect the non-emergency converter circuit (4) from the two electric lines (3) und to connect the emergency converter circuit (41) to the two electric lines, when the mains supply fails.

8. The emergency lighting system according to any one of the preceding claims, wherein
at least one of the first lighting unit and the second lighting unit comprises a storage means or an input means configured to store or input a command; and
the first lighting unit is configured to determine, based on the command, whether the first light source is to be operated in an emergency lighting mode or a non-emergency lighting mode, to operate the first light source using the first supply voltage and/or current when the emergency lighting mode is determined and to operate the first light source using the second supply voltage and/or current when the non-emergency lighting mode is determined; and/or
the second lighting unit is configured to determine, based on the command, whether the second light source is to be operated in the emergency lighting mode or the non-emergency lighting mode, to operate the second light source using the first supply voltage and/or current when the emergency lighting mode is determined and to operate the first light source using the second supply voltage and/or current when the non-emergency lighting mode is determined.

9. The emergency lighting system according to any one of the preceding claims, wherein
the first supply voltage and the second supply voltage are different; and
the first lighting unit and/or the second lighting unit is configured to measure the voltage applied to the two electric lines and to determine whether the first supply voltage or the second supply voltage is provided by the converter device (1, 4) based on the measured voltage.

10. The emergency lighting system according to any one of the preceding claims, wherein
the control circuit (43) is configured to detect power consumption of the emergency lighting device (2) and to determine a malfunction of the emergency lighting device (2) when the difference between the detected current consumption and a predetermined current consumption is greater than a threshold.

11. The emergency lighting system according to claim 10, wherein
the emergency lighting device (2) comprises a plurality of the first lighting units and/or a plurality of the first lighting units; and
the predetermined current consumption and/or the threshold depends on the number of the first lighting units or the number of the second lighting units.

12. The emergency lighting system according to any one of the preceding claims, wherein
the control circuit (43) is configured to signal a communication or test mode to the first lighting unit by controlling the converter device (1, 4) to provide a third supply voltage and/or current via the two-wire connection after providing the second supply voltage and/or current different from the third supply voltage and/or current.

13. The emergency lighting system according to claim 12, wherein
the emergency converter circuit (41) is configured to transmit information to the first lighting unit by modulating a signal containing the information onto the third supply voltage and/or current; and
the first lighting unit is configured to demodulate the signal.

14. The emergency lighting system according to claim 12 or 13, wherein
the first lighting unit is configured to determine the status of the first light source and to transmit a signal indicating the determined status to the emergency converter by modulating the signal onto the third supply voltage and/or current; and
the emergency converter circuit (41) is configured to demodulate the signal transmitted by the first lighting unit.

15. The emergency lighting system according to claim 14, wherein
the emergency lighting device (2) comprises a plurality of the first lighting units, each of which is assigned a unique response time and is configured to transmit the signal in accordance with the unique response time; and
the unique response time indicates a period between the time when the communication or test mode is signaled and the time when the signal is transmitted by the first lighting unit.
